# EUROPÄISCHE PATENTANMELDUNG

(11) **EP 4 212 483 A1**
(43) Veröffentlichungstag der Anmeldung: **19.07.2023**
(21) Anmeldenummer: 23161548.5
(22) Anmeldetag: 27.07.2020
(51) Int. Cl.: C02F 1/461, C02F 1/48, C02F 101/30, C02F 101/36, C02F 101/38

(54) **VERFAHREN ZUM AUFBEREITEN VON ABWASSER UND ABWASSERAUFBEREITUNGSANLAGE**

(30) Priorität: 06.09.2019 DE 102019123943
(62) Teilanmeldung aus: 20187883.2
(71) Anmelder: Städt. Werke AG, 34117 Kassel (DE)
(72) Erfinder: Klein, Harald, 37217 Witzenhausen (DE)
(74) Vertreter: btb IP Bungartz Baltzer Partnerschaft mbB Patentanwälte

(57) **Zusammenfassung**

Die Erfindung betrifft ein Verfahren zur Aufbereitung von Abwasser, wobei das Abwasser einem elektromagnetischen Wechselfeld ausgesetzt wird, um einen Inhaltsstoff aus dem Abwasser zu entfernen. Das neue Verfahren umfasst die Schritte: Anlegen des elektromagnetischen Wechselfeldes und Anlegen der Resonanzfrequenz oder einer Frequenz in der Nähe der Resonanzfrequenz zur Ausflockung des Inhaltsstoffs oder Teile des Inhaltsstoffs.

## Beschreibung

Die vorliegende Erfindung betrifft ein Verfahren zur Aufbereitung von Abwasser nach Anspruch 1. Ferner betrifft die Erfindung eine Abwasseraufbereitungsanlage nach dem Oberbegriff des Anspruchs 4.

Im Stand der Technik ist bekannt, Abwasser derart aufzubereiten, dass sich das Abwasser zur erneuten Benutzung, insbesondere zum Trinken für Menschen eignet.

Aus der US 4 238 326 A sind eine Vorrichtung und ein Verfahren zur Verarbeitung von Fluiden bekannt. Hier ist die Vorrichtung mit mehreren abwechselnden, permanent magnetischen Kathoden- und Anodenplatten versehen, an denen eine Spannung anliegt, die sich aus frequenzgesteuerten Rechteckwellenimpulsen und einer konstanten Basisspannung zusammensetzt um ein elektrisches Feld zu erzeugen. Das elektrische Feld steht dabei im Wesentlichen senkrecht zum Magnetfeld der Kathodenplatten. Bei diesem Verfahren werden unerwünschte Elemente aus einem Fluidstrom durch Anreicherung dieser Elemente an den Elektrodenplatten entfernt, wobei erwünschte Elemente durch Anlegen des elektrischen Feldes mit einer Frequenz, die der Resonanzfrequenz eines der erwünschten Fluidbestandteile entspricht, derart mobilisiert werden, dass sie an den Elektrodenplatten vorbeifließen und sich nicht auf ihnen sammeln bzw. an ihnen anhaften.

Das Verfahren kann zwar durch die Wahl der Frequenz zwischen erwünschten und unerwünschten Inhaltstoffen unterscheiden und gezielt nur die unerwünschten Inhaltsstoffe herausfiltern, hat aber den Nachteil, dass es nur für das Entfernen von Stoffen anwendbar ist, die auch über ein Gleichspannungsfeld elektrolytisch zersetzbar oder elektromagnetisch anziehend sind.

Aus der WO 0119539 A2 sind eine Reinigungsvorrichtung für Gegenstände und ein zugehöriges Verfahren bekannt. Das System beinhaltet die Verwendung von Lösungsmitteln und gelösten Stoffen in einem Waschbad, die die Leitung von elektrischer Energie fördern. Die elektrische Energie kann dem Waschbad und damit dem darin befindlichen Gegenstand entweder als Kombination aus Ultraschallschwingen und einem elektrischen Wechselfeld oder als reines elektrisches Wechselfeld zugeführt werden um Krankheitserreger, Schmutz und synthetische Moleküle, die sich auf dem Gegenstand befinden, zu zerstören oder umzuwandeln. Dabei wird die Wechselwirkung der Energie mit der im Waschbad befindlichen Lösung genutzt, wobei im Falle einer Überlagerung von elektrischer Energie und Ultraschallenergie Energie im entsprechenden Resonanzfrequenzbereich erzeugt werden kann, um einen optimalen Effekt zu erzeugen.

Dieses bekannte Verfahren hat damit aber den Nachteil, dass es nur zur Reinigung von Gegenständen anwendbar ist, die sich in einer geeigneten Lösung im Waschbad befinden.

Aus der DE 10 2014 011 529 A1 ist ein Verfahren zur selektiven Entgasung aus Waschflüssigkeit bekannt. Bei diesem Verfahren wird die Waschflüssigkeit einem elektromagnetischen Wechselfeld ausgesetzt, wobei durch die Wahl des Frequenzbereiches die Bindung von Methan in der Waschflüssigkeit verringert wird, so dass das Methan gelöst und ausgeschieden werden kann. Mit diesem bekannten Verfahren kann in Wasser gelöstes Gas angeregt werden, so dass es in einer gasförmigen Phase aus dem Wasser austreten kann. Der Nachteil des Verfahrens besteht aber darin, dass es nicht zur Reinigung des Wassers durch Entfernen molekularer Verbindungen geeignet ist.

Aus der DE 600 02 680 T2 ist eine Vorrichtung zur Behandlung von Flüssigkeiten in einem elektrischen Feld bekannt. Bei dieser Vorrichtung wird um eine Außenfläche eines Rohres, durch das Wasser strömt, insbesondere zur Verhinderung von Kalkablagerungen eine Spule gewickelt, um ein elektromagnetisches Wechselfeld in der Flüssigkeit aufzubauen. Diese Spule wird dann mit einem Strom beaufschlagt, so dass sich ein Wechselfeld mit einer Frequenz von mehr als 1 kHz und weniger als 100 kHz ergibt.

Aus der DE 197 57793 A1 wiederum ist ein Verfahren zum Auslösen biochemischer Reaktionen bekannt, bei dem über eine bioelektrisch-chemische Aktivierung und über die Erzeugung von biologisch aktiven Einheiten Wasser aufbereitet wird. Dies erfolgt über eine Aktivierung von Ionen über Elektroden, wobei ein Energiefeld aufgebaut wird, dass neben einem Gleichspannungsfeld auch ein Wechselfeld umfasst.

Beide Verfahren können zwar über die elektrische und elektrochemische Beeinflussung der Moleküle bestimmte Ergebnisse hinsichtlich der Entstehung oder Entfernung unerwünschter Stoffe erzielen, jedoch besteht hinsichtlich der Möglichkeit, molekulare Verbindungen eines unerwünschten Inhaltsstoffes zu entfernen, Verbesserungsbedarf.

Ein weiteres, bekanntes Verfahren zur Aufbereitung von Abwasser ist die Elektrolyse. Hierbei wird ein Gleichstrom an Metallplatten angelegt und das Abwasser einem elektrischen Spannungsfeld ausgesetzt. Elektrisch geladene Teilchen können so aus dem Abwasser gewonnen werden, indem diese sich auf den Metallplatten absetzen. Allerdings lassen sich hierbei elektrisch neutrale Inhaltsstoffe, wie beispielsweise Phosphate, nicht aus dem Abwasser gewinnen.

Eine Aufgabe der Erfindung ist es, ein Verfahren zur Aufbereitung von Abwasser zur Verfügung zu stellen, mit dem möglichst viele unerwünschte Inhaltsstoffe möglichst effektiv aus dem Abwasser gewonnen werden können. Insbesondere soll das neue Verfahren auch für die Anwendung im Zusammenhang mit elektrisch neutralen Inhaltsstoffen geeignet sein.

Bei dem neuen Verfahren zur Aufbereitung von Abwasser wird das Abwasser einem elektromagnetischen Wechselfeld ausgesetzt, um einen Inhaltsstoff aus dem Abwasser zu entfernen. Das Verfahren umfasst die Schritte:
- Anlegen des elektromagnetischen Wechselfeldes und
- Einstellen der Frequenz des Wechselfeldes derart, dass die Frequenz die die Resonanzfrequenz der Eigenschwingung des Moleküls des Inhaltstoffes oder einer Frequenz in der Nähe der Resonanzfrequenz entspricht, um das Molekül aufzuspalten und den Inhaltsstoff oder Teile des Inhaltsstoffs ausflocken zu lassen.

Durch das Spannungsfeld kann elektrische Energie zu den Inhaltsstoffen des Abwassers geführt werden, wodurch diese angeregt werden. Insbesondere erfolgt die Anregung im Bereich der Resonanzfrequenz der Inhaltsstoffe, wodurch zum einen eine interne Ladungstrennung innerhalb des einzelnen Inhaltsstoff-Atoms oder-Moleküls erfolgt und bei weiterer Energiezufuhr eine Aufspaltung des Inhaltsstoff-Atoms bzw. Moleküls erfolgt. Die derart aufgespaltenen Teile des Inhaltsstoffs können, da sie unterschiedlich geladen sind, durch ein Spannungsfeld getrennt werden.

Ein weiterer Aspekt der Erfindung ist die Bereitstellung einer Abwasseraufbereitungsanlage, die einen Sekundärreaktor mit einem länglichen Abschnitt entlang dem das Abwasser fließt umfasst, wobei entlang dieses Abschnitts Metallplatten als Pakete derart angeordnet sind, dass das Abwasser entlang dieser Metallplatten fließt. Bevorzugt weist die Abwasseraufbereitungsanlage ein Softwareprogramm zur Realisierung des Betriebs der Abwasseraufbereitungsanlage unter Ausführung eines Verfahrens nach einem der Ansprüche 1 bis 3 auf..

Beispielhafte Ausführungsformen werden in den abhängigen Ansprüchen beschrieben.

Gemäß einer vorteilhaften umfasst das Verfahren den weiteren Schrittdes Variierens der Frequenz des elektromagnetischen Wechselfeldes bis die Resonanzfrequenz des Inhaltsstoffs oder eine Frequenz in der Nähe der Resonanzfrequenz erreicht ist.

Durch das Anlegen der Resonanzfrequenz kann mit einer kleinen Energiezufuhr das Aufspalten der Inhaltsstoffe erreicht werden. Je weiter man von der Resonanzfrequenz entfernt ist, umso mehr Energie muss zugeführt werden, damit der Inhaltsstoff auseinanderbricht.

Das Verfahren ist bevorzugt geeignet, Phosphate, Triazin-Herbizide, Saure Pestizide, Perfluor-Octansäure, Perfluor-Octansulfonsäure, Benzotriazol, 4-Methy1-1H-Benzotriazol, 5-Methy1-1H-Benzotriazol, Ethylendiamintetraessigsäure, Diethylendiaminpentaessigsäure, Carbamazepin, Diclifenac, 1713-Estradiol, Estron, Gabepentin, lohexol, lomeprol, lopamidol, lopromid, Irbesartan, Metoprolol, Sulfamethoxazol aus dem Abwasser zu entfernen.

Gemäß einer beispielhaften Ausführungsform der Erfindung bezüglich der Abwasseraufbereitungsanlage wird eine Abwasseraufbereitungsanlage zur Verfügung gestellt, die einen Sekundärreaktor mit einem länglichen Abschnitt, entlang dem das Abwasser fließt, aufweist, wobei entlang dieses Abschnitts Metallplatten als Pakete derart angeordnet sind, dass das Abwasser entlang dieser Metallplatten fließt.

In einer weiteren erfindungsgemäßen Ausführungsform wird eine Abwasseraufbereitungsanlage zur Verfügung gestellt, wobei zwei, drei oder beliebig viele Metallplatten-Pakete angeordnet sind, wobei Metallplatten-Pakete in der Nähe des Zulaufs mit einer alternierenden Ladung angeordnet sind und in der Nähe des Ablaufs Metallplatten mit einer ersten Ladung auf einer ersten Seite und Metallplatten mit einer zweiten Ladung auf einer zweiten Seite angeordnet sind.

In einem ersten Bereich ist es vorrangig, Energie zuzuführen. In diesem Fall sind kurze Abstände zwischen unterschiedlich geladenen Platten vorteilhaft. Auf diese Weise können leichter hohe Spannungsfelder aufgebaut werden. In einem hinteren Teil liegen bereits die aufgespaltenen, unterschiedlich geladenen Teile der Inhaltsstoffe vor. In diesem Bereich ist es wichtig, die unterschiedlich geladenen Teile der Inhaltsstoffe zu trennen. Es ist dann sinnvoll, gleich geladene Platten an einem Ort zu bündeln, wodurch gegensätzlich geladene Teile der Inhaltsstoffe zu diesem Ort abgelenkt werden können.

Gemäß einem Aspekt der Erfindung wird eine Abwasseraufbereitungsanlage zur Verfügung gestellt, wobei in der Nähe des Abflusses eine Trennvorrichtung mit einer Trennwand angeordnet ist.

Mit einer Trennvorrichtung kann die Trennung der unterschiedlich geladenen Teile der Inhaltsstoffe mechanisch vorgenommen werden.

In einer weiteren erfindungsgemäßen Ausführungsform wird eine Abwasseraufbereitungsanlage zur Verfügung gestellt, die zur Durchführung eines Verfahrens nach einem der Ansprüche 1 bis 3 vorgesehen ist.

Als eine Idee der Erfindung kann angesehen werden, Abwasser einem elektromagnetischen Wechselfeld auszusetzen, wobei die Frequenz des Wechselfelds der Resonanzfrequenz eines Inhaltsstoffs entsprechen soll, der aus dem Abwasser entfernt werden soll. Durch die Anregung des Inhaltsstoffs zu Eigenschwingungen kommt es durch Überschwingen zu einem Auseinanderbrechen der Moleküle der Inhaltsstoffe. Es ergibt sich, dass ein zuvor elektrisch neutrales Molekül in elektrisch geladene Teile zerspringt. Diese Teile können durch ein elektrisches Feld aus dem Abwasser herausgezogen werden, wodurch das Abwasser gereinigt werden kann.

Der Erfindung liegt die Erkenntnis zugrunde, dass jedes Atom und jedes Molekül eine Eigenschwingung besitzen. Wird das Atom oder das Molekül angeregt, das heißt wird dem Atom oder dem Molekül Energie zugeführt, kann es diese Energie aufnehmen und wieder abgeben. Wird jedoch dem Atom oder dem Molekül sehr viel Energie zugeführt oder wird dem Atom oder dem Molekül Energie mit seiner Resonanzfrequenz zugeführt, kann das Atom bzw. das Molekül "überlastet" werden. Insbesondere kann es bei der Energiezufuhr mit der Resonanzfrequenz zu einer "Resonanzkatastrophe" kommen, bei der das Atom oder das Molekül zerspringt und in seinen Einzelteilen vorliegt.

Atome oder Moleküle sind nach außen ladungsneutral. Nach einem Zerspringen des Atoms oder des Moleküls können Teile des Atoms oder des Moleküls vorliegen, die positiv oder negativ geladen sind. Diese geladenen Teile können durch ein Spannungsfeld getrennt bzw. aus einem Abwasser herausgefiltert werden.

Die einzelnen Merkmale können selbstverständlich auch untereinander kombiniert werden, wodurch sich zum Teil auch vorteilhafte Wirkungen einstellen können, die über die Summe der Einzelwirkungen hinausgehen.

### KURZE BESCHREIBUNG DER ZEICHNUNGEN

Weitere Einzelheiten und Vorteile der Erfindung werden anhand der in den Zeichnungen dargestellten Ausführungsbeispiele deutlich. Es zeigen
- Fig. 1: einen Primärreaktor 1,
- Fig. 2: einen Sekundärreaktor 2 in einer seitlichen Darstellung,
- Fig. 3: einen Sekundärreaktor 2 in einer Draufsicht,
- Fig. 4: eine Abdeckung für den Sekundärreaktor 2,
- Fig. 5: den Sekundärreaktor 2 in einer seitlichen Darstellung,
- Fig. 6: eine Abdeckung für den Sekundärreaktor 2,
- Fig. 7: den Sekundärreaktor 2 in einer Draufsicht,
- Fig. 8: eine Draufsicht des Systems mit Primärreaktor 1 und Sekundärreaktor 2,
- Fig. 9: eine seitliche Darstellung des Systems mit Primärreaktor 1 und Sekundärreaktor 2.

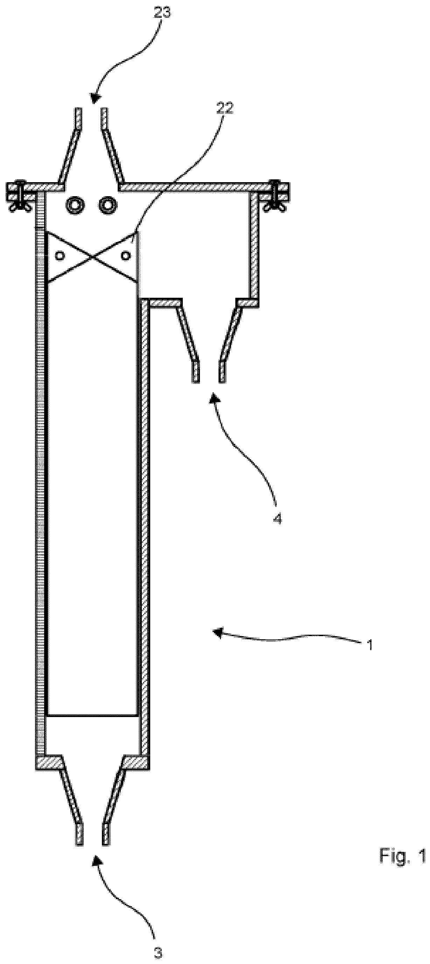

Fig. 1 zeigt einen Primärreaktor 1 zu einer ersten Reinigung des Abwassers, beispielsweise von festen Inhaltsstoffen, beispielsweise Schwebestoffen. Durch die Elektroden 22 kann eine Erstbehandlung vorgenommen werden, wodurch die festen Inhaltsstoffe zusammengeballt werden können und dadurch entfernt werden können. Das zu reinigende Abwasser wird durch den Zulauf 3 in den Primärreaktor 1 eingebracht und durch den Ablauf für Schwimmschichten 4 aus dem Primärreaktor 1 ausgelassen. Der Primärreaktor 1 weist einen Ablauf für Gase 23 zur Entlüftung auf, wodurch schädliche oder explosive Gase aus dem System entweichen können.

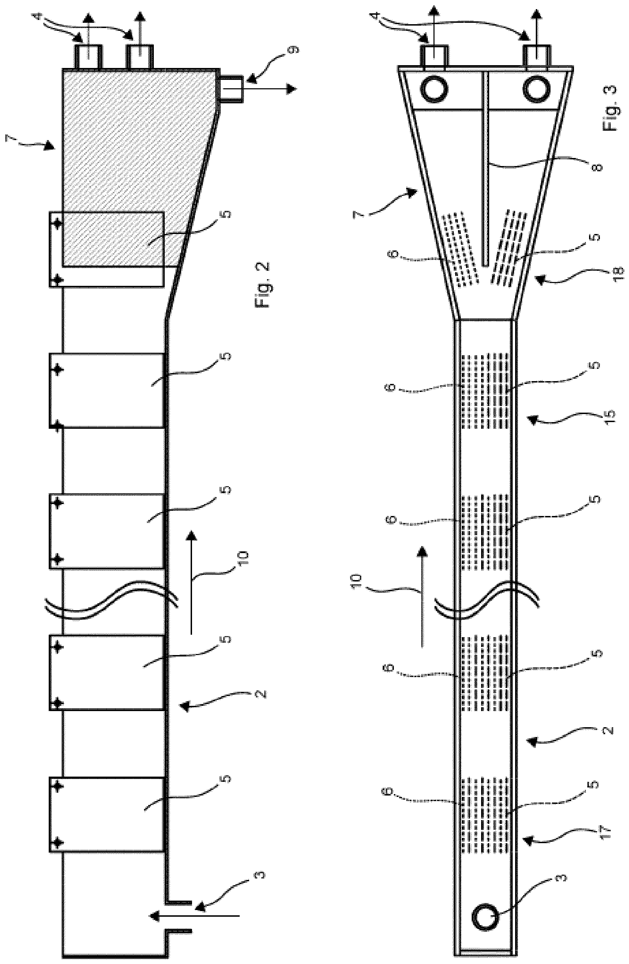

Fig. 2 zeigt einen Sekundärreaktor 2 in einer seitlichen Darstellung. Der Sekundärreaktor 2 weist in seiner Fließrichtung, dies ist die Richtung in der das Abwasser ausgehend von dem Zulauf 3 hin zum Ablauf für Schwimmschichten 4 fließt, eine Kaskadierung von Metallplatten 5 und 6 auf, an die ein elektromagnetisches Wechselfeld angeschlossen wird. Kurz vor dem Ablauf für Schwimmschichten 4 ist eine Trennvorrichtung 7 angeordnet, die das unterschiedlich geladene Wasser, also die aufgespaltenen Moleküle, trennt.

Fig. 3 zeigt den Sekundärreaktor 2 von oben betrachtet mit den Metallplatten 5 und 6. Die Metallplatten 5 stellen in einer Halbwelle der Spannungsversorgung Kathoden dar, sind also negativ geladen, und die Metallplatten 6 stellen Anoden dar, sind also positiv geladen. In der darauffolgenden Halbwelle wechselt die Ladung. Nahe des Zulaufs 3 können mehrere Metallplatten 5, 6 hintereinander senkrecht bzw. quer zur Fließrichtung angeordnet werden. Die Ladungen können dabei senkrecht zur Fließrichtung alternierend ausgebildet sein, sodass sich eine Anoden-Metallplatte 6 mit einer Kathoden-Metallplatte 5 abwechselt. Es können weitere Metallplatten-Pakete 15, 17 und 18 entlang der Fließrichtung angeordnet werden, wobei die Anordnung zusehends derart sein kann, dass auf einer Seite mehr Anoden-Metallplatten 6 und auf der anderen Seite mehr Kathoden-Metallplatten 5 angeordnet sind. In einem letzten Paket 15 können auf einer Seite ausschließlich Anoden-Metallplatten 6 und auf der anderen Seite ausschließlich Kathoden-Metallplatten 5 angeordnet sein. Das Abwasser bzw. dessen Inhaltsstoffe sind dann derart getrennt, dass sich auf einer Seite die positiv geladenen Inhaltsstoffe und auf der anderen Seite die negativ geladenen Inhaltsstoffe sammeln. In der weiteren Fließrichtung 10 kann eine Trennvorrichtung 7 mit einer Trennwand 8 derart angeordnet sein, sodass die unterschiedlich geladenen Teile getrennt werden und in verschiedenen Abläufen für Schwimmschichten 4 aufgefangen werden können.

Fig. 3 zeigt insbesondere ein Metallplatten-Paket 17, wobei die jeweiligen einzelnen Metall-Platten 5, 6 eine unterschiedliche Ladung aufweisen können. Dieses Metall-Plattenpaket 17 ist in einem ersten Abschnitt der Anlage in der Nähe des Zulaufs 3 angeordnet, wobei die einzelnen Metallplatten 5, 6 alternierend in Richtung oben bzw. unten bezüglich der Zeichnungsebene angeordnet sind. In diesem vorderen Bereich der Anlage geht es ausschließlich darum, dem Abwasser Energie zuzuführen, wobei die Energie eine Frequenz aufweisen sollte, die der Resonanzfrequenz des aufzuspaltenden Moleküls bzw. Atoms entsprechen sollte oder zumindest in deren Nähe liegen sollte. Eine Trennung bereits aufgespaltener Inhaltsstoffe ist in diesem Bereich nicht möglich, da eine Aufspaltung noch nicht erfolgte. Zudem ist die alternierende Anordnung auch deswegen vorteilhaft, da hierdurch zwischen unterschiedlich geladenen Metallplatten 5, 6 ein nur kurzer Abstand realisiert werden kann. Hierdurch ist es einfacher, ein starkes Spannungsfeld aufzubauen. Am Ende der Anlage ist ein weiteres Metallplatten-Paket 15 mit einzelnen Metallplatten 5, 6 angeordnet. Bei diesem Metallplatten-Paket 15 sind die Metallplatten 5, 6 nach ihrer Ladung geordnet angeordnet. In der Zeichnung sind oben die Metallplatten 6 und unten die Metallplatten 5 angeordnet. In diesem Bereich am Ende der Anlage wurden bereits die Inhaltsstoffe während ihres Laufs durch die Anlage aufgespalten, weswegen in diesem Bereich nur noch eine Trennung und Filterung der gespaltenen Inhaltsstoffe durchgeführt wird.

Die Metallplatten-Pakete 18 führen die unterschiedlich geladenen aufgespaltenen Teile der Inhaltsstoffe in unterschiedliche Behälter.

Eine Ausflockung von Inhaltsstoffen wird daher durch elektromagnetische Felder bzw. Wellen erreicht, wobei eine Anregung der Moleküle der Inhaltsstoffe beabsichtigt wird. Hierzu sind die Metallplatten 5, 6 in dem Sekundärreaktor 2 vorgesehen, die in resonatorischer Kompatibilität zu den Inhaltsstoffen, die ausgefällt werden sollen, diese mit Energie versorgen. Hierdurch ergibt sich ein nicht-harmonisches Überschwingen, wodurch sich eine Ladungstrennung innerhalb des Atoms bzw. Moleküls des Inhaltsstoffs und letzten Endes zum Auseinanderbrechen des Atoms oder Moleküls in seine unterschiedlich geladenen Teile ergibt.

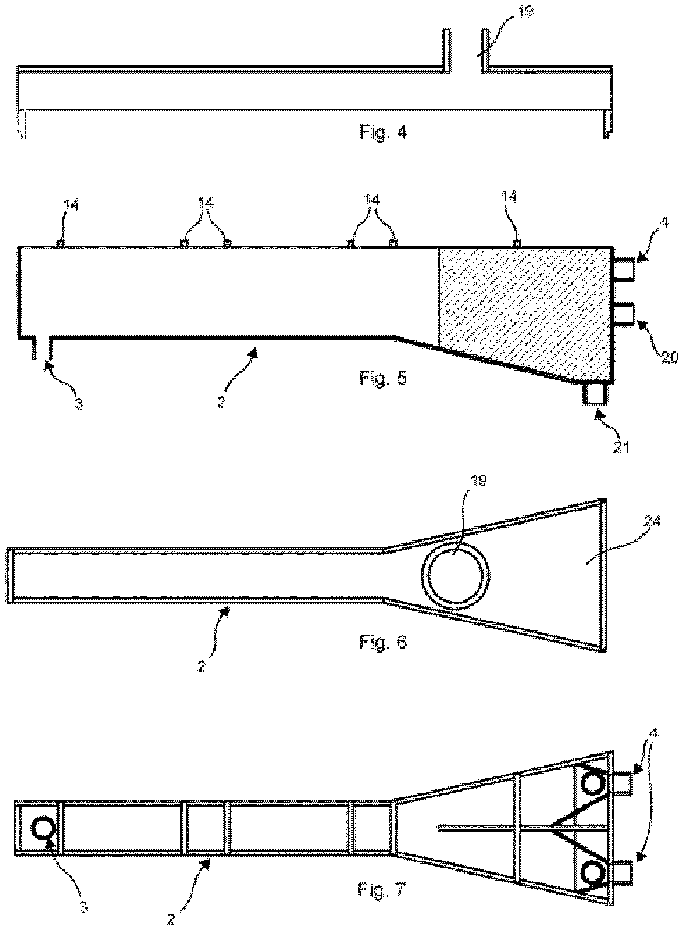

Fig. 4 zeigt eine Abdeckung 24 des Sekundärreaktors 2 mit einer Absaugöffnung 19 für vorhandene oder entstehende Gasbestandteile.

Fig. 5 zeigt den Sekundärreaktor 2 in einer seitlichen Darstellung mit dem Zufluss 3 und den Abläufen 4, 20 und 21. Der Ablauf 4 dient dem Ablauf für Schwimmschichten. Der Ablauf 20 ist für den Abfluss der Klarphase und der Ablauf 21 ist für den Abfluss des Bodenschlamms vorgesehen. Die Stege 14 dienen zur Befestigung, zur Auflage oder zur Anordnung der Elektroden 5.

Fig. 6 zeigt den Sekundärreaktor 2 mit der Absaugöffnung 19, damit entstehende Gase, beispielsweise gesundheitsschädliche, brennbare oder explosive Gase, aus dem Sekundärreaktor 2 entweichen bzw. abgesaugt werden können. Der Sekundärreaktor 2 ist in einer Draufsicht dargestellt, wobei die Abdeckung 24 auf dem Sekundärreaktor 2 aufliegt.

Fig. 7 zeigt in einer Draufsicht den Sekundärreaktor 2 mit dem Zufluss 3 und den Abflüssen bzw. Abläufen 4, 20 und 21. Der Sekundärreaktor 2 ist in einer Draufsicht ohne die Abdeckung 24 dargestellt.

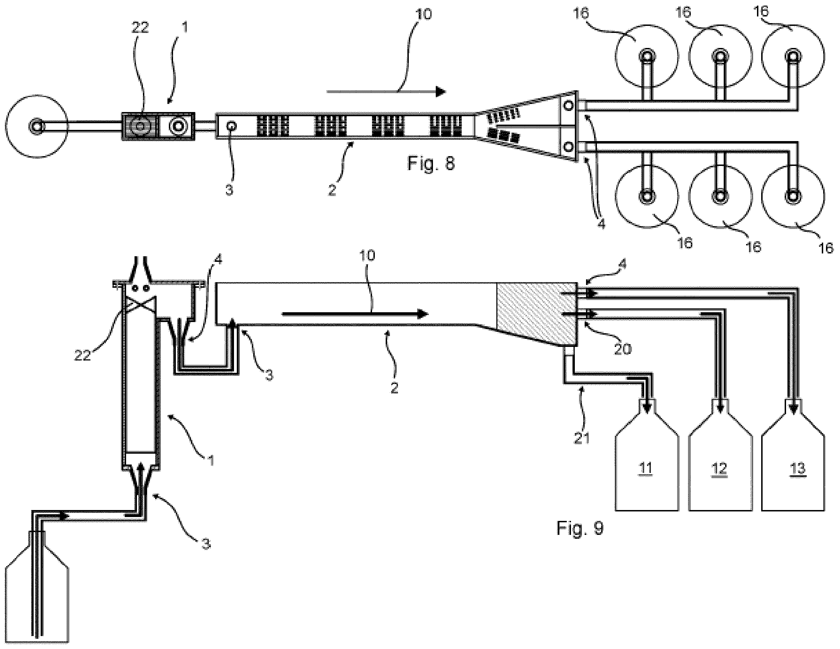

Fig. 8 zeigt das komplette System mit dem Primärreaktor 1 und dem Sekundärreaktor 2 in einer Draufsicht. Außerdem sind Auffangbehälter 16 gezeigt.

Fig. 9 zeigt das komplette System mit dem Primärreaktor 1 und dem Sekundärreaktor 2 in einer Seitenansicht. Außerdem sind Auffangbehälter für Bodenschlamm11, für die Klarphase 12 und für die Schwimmschicht 13 gezeigt.

Es sei angemerkt, dass der Begriff "umfassen" weitere Elemente oder Verfahrensschritte nicht ausschließt, ebenso wie der Begriff "ein" und "eine" mehrere Elemente und Schritte nicht ausschließt.

### LISTE DER BEZUGSZEICHEN

- 1: Primärreaktor
- 2: Sekundärreaktor
- 3: Zulauf
- 4: Ablauf für Schwimmschichten
- 5: Metallplatte
- 6: Metallplatte
- 7: Trennvorrichtung
- 8: Trennwand
- 9: Ablauf Schlamm
- 10: Fließrichtung
- 11: Auffangbehälter für Bodenschlamm
- 12: Auffangbehälter für die Klarphase
- 13: Auffangbehälter für die Schwimmschicht
- 14: Stege, auf denen Elektroden 5 befestigt bzw. angeordnet sind
- 15: Metallplatten-Paket (bezüglich des Zulaufs hinten)
- 16: Auffangbehälter
- 17: Metallplatten-Paket (bezüglich des Zulaufs vorne)
- 18: Metallplatten-Paket zum Filtern des aufgespaltenen Inhaltsstoffs
- 19: Absaugöffnung, um das Gas, das entsteht, abgesaugt werden kann
- 20: Ablauf für die Klarphase
- 21: Ablauf für den Bodenschlamm
- 22: Elektroden
- 23: Ablauf für Gase
- 24: Abdeckung des Sekundärreaktors

## Patentansprüche

1. Verfahren zur Aufbereitung von Abwasser durch Entfernen von Molekülen eines Inhaltsstoffes aus dem Abwasser, wobei das Abwasser einem elektromagnetischen Wechselfeld ausgesetzt wird, um den Inhaltsstoff in einzelne Teil aufzuspalten und aus dem Abwasser zu entfernen, wobei der Inhaltsstoff eine Resonanzfrequenz aufweist, wobei die Resonanzfrequenz zur Anregung des Inhaltsstoffs zu Eigenschwingungen führt, wodurch es zu einer Aufspaltung des Inhaltsstoffs oder Teile des Inhaltsstoffs kommt, umfassend die Schritte:
• Anlegen des elektromagnetischen Wechselfeldes an das Abwasser,
• Aufspalten der Moleküle des Inhaltsstoffs durch Einstellen einer Frequenz des elektromagnetischen Wechselfeldes, die als Resonanzfrequenz oder Frequenz nahe der Resonanzfrequenz zum Aufbrechen der Moleküle führende Eigenschwingungen zur Aufspaltung des Inhaltsstoffs oder Teilen des Inhaltsstoffs in positiv oder negativ geladene Teile verursacht und
• Abtrennen der aufgespaltenen positiv oder negativ geladenen Teile des Inhaltsstoffs über ein Spannungsfeld oder durch Ausfiltern aus dem Abwasser.

2. Verfahren nach Anspruch 1, wobei das Verfahren den weiteren Schritt umfasst:
• Variieren der Frequenz des elektromagnetischen Wechselfeldes bis die Resonanzfrequenz des Inhaltsstoffs oder eine Frequenz in der Nähe der Resonanzfrequenz erreicht ist.

3. Verfahren nach einem der vorhergehenden Ansprüche, wobei das Verfahren geeignet ist, um Phosphate, Triazin-Herbizide, Saure Pestizide, Perfluor-Octansäure, Perfluor-Octansulfonsäure, Benzotriazol, 4-Methy1-1H-Benzotriazol, 5-Methy1-1H-Benzotriazol, Ethylendiamintetraessigsäure, Diethylendiaminpentaessigsäure, Carbamazepin, Diclifenac, 17ß-Estradiol, Estron, Gabepentin, Iohexol, lomeprol, lopamidol, lopromid, Irbesartan, Metoprolol, Sulfamethoxazol aus dem Abwasser zu entnehmen.

4. Abwasseraufbereitungsanlage zur Durchführung eines Verfahrens nach einem der Ansprüche 1 bis 3, umfassend einen Sekundärreaktor (2) mit einem länglichen Abschnitt entlang dem das Abwasser fließt, wobei entlang dieses Abschnitts Metallplatten (5, 6) als Metallplatten-Pakete (15, 17, 18) derart angeordnet sind, dass das Abwasser entlang dieser Metallplatten (5, 6) fließt, **dadurch gekennzeichnet, dass** die Abwasseraufbereitungsanlage ein Softwareprogramm umfasst, das die Abwasseraufbereitungsanlage zu veranlassen vermag, ein Verfahren nach einem der Ansprüche 1 bis 3 auszuführen..

5. Abwasseraufbereitungsanlage nach Anspruch 4, wobei zwei, drei oder mehr Metallplatten-Pakete (15, 17, 18) vorgesehen sind, wobei Metallplatten-Pakete (17) in der Nähe des Zulaufs mit einer alternierenden Ladung und Metall-platten-Pakete (15, 18) nahe des Ablaufs angeordnet sind und bei den Metall-platten-Paketen (15, 18) nahe des Ablaufs Metallplatten mit einer ersten Ladung auf einer ersten Seite und Metallplatten mit einer zweiten Ladung auf einer zweiten Seite angeordnet sind.

6. Abwasseraufbereitungsanlage nach einem der Ansprüche 4 oder 5, wobei in der Nähe des Abflusses eine Trennvorrichtung (7) mit einer Trennwand (8) angeordnet ist.
